# EUROPÄISCHE PATENTANMELDUNG

(11) **EP 2 256 473 A2**
(43) Veröffentlichungstag der Anmeldung: **01.12.2010**
(21) Anmeldenummer: 10163995.3
(22) Anmeldetag: 27.05.2010
(51) Int. Cl.: G01M 3/24

(54) **Wassererhitzer mit Wasserleckage-Erfassungsfunktion**

(30) Priorität: 27.05.2009 CN 200910033981
(71) Anmelder: BSH Bosch und Siemens Hausgeräte GmbH, 81739 München (DE)
(72) Erfinder: Schröder, Bernd, 210008, Nanjing Jiangsu (CN)

(57) **Zusammenfassung**

Die vorliegende Erfindung offenbart einen Warmwassergerät, das einen zum Aufnehmen einer gewissen zu erwärmenden Wassermenge benutzten Wasserspeicher, ein Einlassrohr und ein Auslassrohr, die mit dem Wasserspeicher verbunden sind, damit Wasser in den Wasserspeicher fließen kann und aus dem Wasserspeicher fließen kann, eine zum Erwärmen von Wasser in dem Wasserspeicher benutzte Heizquelle bzw. Heizeinrichtung sowie einen Schallsensor bzw. Schalsendeempfänger umfasst, der zum Erkennen einer durch eine Wasserleckage in dem Wasserspeicher verursachten Veränderung der Tonfrequenz benutzt wird.

Der Schalsendeempfänger wird benutzt, indem, wenn der Wasserspeicher eine Wasserleckage aufweist, eine entsprechende Veränderung der Tonfrequenz in Echtzeit erfasst wird und entsprechende Maßnahmen ergriffen werden, um die durch die Wasserleckage verursachten Auswirkungen zu minimieren.

## Beschreibung

### Hintergrund der Erfindung

Die vorliegende Erfindung betrifft ein Warmwassergerät, insbesondere Warmwasserspeicher oder Wassererhitzer, mit einem Wasserspeicher zum Aufnehmen von zu erwärmenden Wasser, einem Wassereinlauf zum Einspeisen des Wasserspeichers, einem Wasserablauf zum Entnehmen von Warmwasser aus dem Wasserspeicher und einer Heizeinrichtung zum Erwärmen des Wassers im Wasserspeicher.

### Hintergrund der Erfindung

Warmwasserspeicher werden verbreitet im Haushalt benutzt und bieten im täglichen Leben große Annehmlichkeiten. Ein Warmwasserspeicher umfasst gewöhnlich einen Wasserspeicher zum Speichern von zu erwärmenden kaltem Wasser. Der Wasserspeicher wird mit Frischwasser bzw. kaltem Wasser gespeist, welches anschließend mit Hilfe einer Heizeinrichtung auf die gewünschte Temperatur erhitzt wird. Das erhitzte bzw. heiße Wasser wird typischerweise über einen langen Zeitraum in dem Wasserspeicher aufbewahrt. In Folge dessen und durch Verunreinigungen des Wassers kann die Innenwand des Wasserspeichers korrodieren. Es sind unterschiedliche Maßnahmen bekannt, um Korrosion zu reduzieren, die an der Innenwand eines Wasserspeichers auftritt, z.B. das Anbringen einer Korrosionsschutzbeschichtung an der Innenwand. Jedoch hat sich das Anbringen dieser Schutzbeschichtung als fehleranfällig herausgestellt, und folglich wird die Lebensdauer des Warmwasserspeichers reduziert.

Im Stand der Technik wird beispielsweise eine Einrichtung zur Erkennung von Wasserleckagen eingesetzt, welche eine automatische Absperrung der Wasserzufuhr zu dem Wasserspeicher, wenn eine Wasserleckage erkannt wird, bewirkt. Folglich können Schäden und insbesondere Wasserschäden in der Umgebung des Warmwasserspeichers vermieden werden.

Die US 3,770,002 offenbart eine Vorrichtung zur Erkennung von Wasserleckagen. Die Vorrichtung umfasst einen Kondensator, der poröses Dichtmaterial aufweist. Ein mit Wasser im Kontakt kommender Kondensator wird entsprechend als Leckage ausgewertet, welches ein Absperren eines Magnetventils durch das Steuersystem bewirkt. So kann kein Wasser in den defekten Wasserspeicher fließen.

Auch die chinesische Patentanmeldung CN 200810026308.8 offenbart eine Wasserleckage-Erkennungsvorrichtung. Eine Erfassungseinrichtung ist auf zwei Sondenstiften in einem Wassersammelbecken angeordnet. Wenn eine Wasserleckage am Wasserspeicher auftritt und dazu führt, dass zwei Sondenstifte in das Wasser eintauchen, das sich in dem Wassersammelbecken angesammelt hat, wird eine Stromkreis-Steuervorrichtung eingeschaltet, um ein elektromagnetisches Ventil abzuschalten, und folglich wird das einfließende Kaltwasser abgesperrt bzw. abgedreht.

Die aus dem Stand der Technik bekannten Vorrichtungen reagieren jedoch träge auf mögliche Leckagen, so dass es leicht zu Wasserschäden in der Umgebung des Warmwasserspeichers führen kann. Ferner weisen diese Vorrichtungen einen komplizierten Aufbau oder es sind weitere Komponenten wie ein Wassersammelbecken notwendig.

### Der Erfindung zugrundeliegende Aufgabe

Es ist eine Aufgabe der vorliegenden Erfindung, ein Warmwassergerät bereitzustellen, das eine Wasserleckage schnell, insbesondere in Echtzeit, erkennt.

### Erfindungsgemäße Lösung

Die Lösung der Erfindung zugrundeliegenden Aufgabe gelingt durch ein Warmwassergerät, das einen Schallsendeempfänger zum Erfassen einer durch eine Wasserleckage des Wasserspeichers hervorgerufenen Veränderung einer Tonfrequenz aufweist. Die Tonfrequenz ist mittels des Schallsendeempfängers erzeugbar. Folglich kann eine Automatikfunktion zur Erkennung einer Wasserleckage implementiert werden, welches einen sicheren Betrieb des Warmwassergerätes bereitstellt. Mittels des Schallsendeempfängers kann eine Wasserleckage des Warmwasserspeichers, und insbesondere der Innenwand, detektiert werden. Somit kann eine Detektierung bzw. Erfassung in Echtzeit erfolgen, so dass keine Wasserschäden entstehen können. Mittels eines Steuersystems bzw. Steuergeräts des Warmwassergeräts kann bei einer Detektierung einer Leckage das zulaufende Wasser bzw. Frischwasser abgedreht werden. Folglich kann die Umgebung des Warmwassergeräts schnell in Echtzeit vor Wasserschäden geschützt werden.

### Bevorzugte Ausgestaltung der Erfindung

Es ist bevorzugt, dass der Schallsendeempfänger ein piezoelektrisches Element zum Senden von Schalwellen mit einer bestimmten Tonfrequenz umfasst. Ein solches Element ist leicht implementierbar und kostengünstig in der Herstellung.

Vorteilhafterweise ist das piezoelektrische Element weiter dergestalt ausgebildet, um Schallwellen zu empfangen, die von einer Außenwand des Wasserspeichers reflektiert werden. Somit kann das piezoelektrische Element eine weitere Funktion erfüllen, welches zu einer kompakten Bauweise führen kann.

Gemäß einer Ausführungsform der vorliegenden Erfindung sind der Schalsendeempfänger und/oder das piezoelektrische Element dergestalt ausgebildet, um auf Basis eines vorherbestimmten Schwellwerts der Tonfrequenz eine durch eine Wasserleckage hervorgerufenen Veränderung der Tonfrequenz zu erfassen. Folglich kann eine Wasserleckage in Echtzeit detektiert werden

Erfindungsgemäß bevorzugt umfasst das Warmwassergerät weiter eine Wasserabsperrvorrichtung und ein Steuersystem, das die Wasserabsperrvorrichtung und den Schalsendeempfänger miteinander verknüpft, wobei das Steuersystem dergestalt ausgebildet ist, um Signale zu empfangen, welche die Veränderung der Tonfrequenz darstellen, und um die Wasserabsperrvorrichtung im Falle einer Veränderung der Tonfrequenz zu aktivieren. Durch die Verbindung des Steuersystems bzw. Steuergeräts mit der Wasserabsperrvorrichtung kann eine Automatikfunktion im Falle einer Wasserleckage implementiert werden.

Zweckmäßigerweise umfasst die Wasserabsperrvorrichtung ein elektromagnetisches Ventil, das an dem Einlassrohr angeordnet ist, und das elektromagnetische Ventil ist ansteuerbar, um den Wasserfluss durch das Einlassrohrs zu sperren.

Die weitere Verbesserung der vorliegenden Erfindung ist es, dass die Wasser-Absperrvorrichtung ein elektromagnetisches Ventil umfasst, das an dem Wassereinlauf angeordnet ist, und das elektromagnetische Ventil angesteuert wird, den Wasserfluss durch den Wassereinlauf zu sperren. Durch die Verwendung eines elektromagnetischen Ventil kann die Automatikfunktion zur Wasserabsperrung durch das Steuersystem bereitgestellt werden, das ebenfalls das Ventil steuern kann.

Bevorzugt kann die Heizeinrichtung ebenfalls mittels des Steuersystems gesteuert werden. Folglich kann im Falle einer Wasserleckage die Heizeinrichtung bzw. Heizquelle notabgeschaltet werden.

Im Vergleich zu dem Stand der Technik ist die vorliegende Erfindung dahingehend vorteilhaft, dass der Schalsendeempfänger bzw. Schallsensor einsetzbar ist, um eine Wasserleckage des Wasserspeichers in Echtzeit zu erfassen. Dazu wird eine Veränderung der Tonfrequenz durch den Schalsendeempfänger erfasst bzw. detektiert, und in Folge dessen können unterschiedliche Maßnahmen zum Schutz der Umgebung des Warmwassergeräts durchgeführt werden, d.h. beispielsweise das Abdrehen der Wasserzufuhr. Ferner weist der Schalsendeempfänger einen einfachen Aufbau und kompakte Maße, was bei der Konstruktion und Herstellung von Warmwassergeräten, wie Wassererhitzern oder Boilern, von besonderem Vorteil ist.

### Kurzbeschreibung der Zeichnungen

- Fig. 1: ist eine schematische Darstellung einer Ausführungsform eines Warmwassergeräts gemäß der vorliegenden Erfindung; und
- Fig. 2: ist ein funktionelles Schaltbild eines Betriebsschaltkreises des in Fig. 2 gezeigten Warmwassergeräts gemäß einer Ausführungsform.

### Ausführliche Beschreibung anhand eines Ausführungsbeispiels

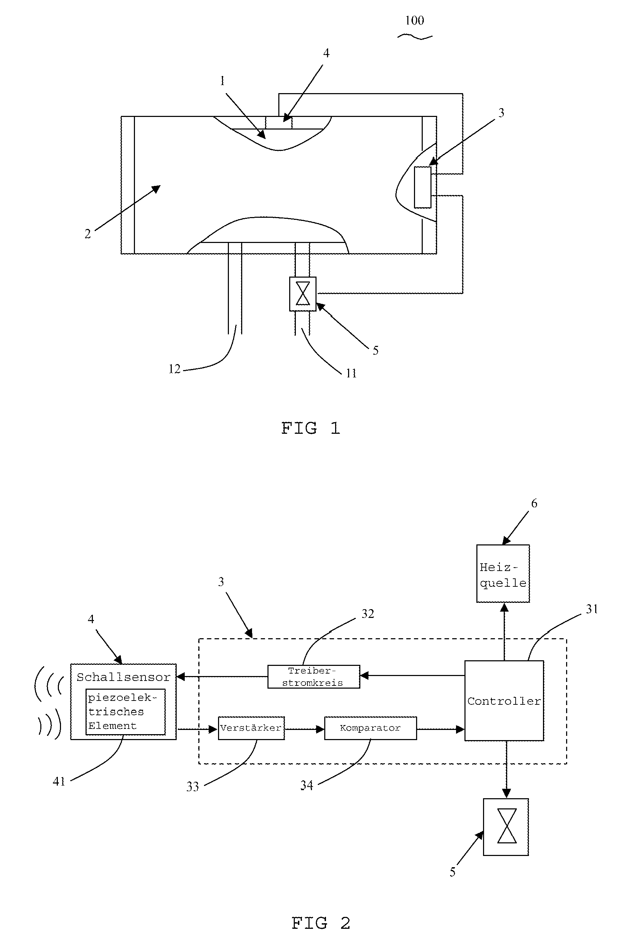

Eine Ausführungsform eines Warmwassergeräts bzw. Wassererhitzers gemäß der vorliegenden Erfindung ist in Fig. 1 gezeigt. In der vorliegenden Ausführungsform ist ein Wassererhitzer 100 waagerecht angeordnet und umfasst einen zum Aufnehmen zu erwärmenden Wassers benutzten Wasserspeicher 1, ein an der Außenfläche des Wasserspeichers 1 angeordnetes Gehäuse 2 und eine mit Schaummaterial gefüllte, zwischen dem Wasserspeicher 1 und dem Gehäuse 2 ausgebildete Isolationsschicht (in den Zeichnungen nicht gezeigt).

Der Wasserspeicher 1 hat im Allgemeinen die Form eines Zylinders und ist gewöhnlich aus dunklem Metall, wie etwa Stahl oder Eisen, hergestellt. Der Wasserspeicher 1 umfasst ein Einlassrohr bzw. Wassereinlauf oder Zulauf 11, das bzw. der zum Einlassen bzw. Speisen von Kaltwasser bzw. Frischwasser in den Wasserspeicher benutzt wird, und ein Auslassrohr bzw. Wasserablauf oder Ablauf 12, das bzw. der zum Entnehmen von erwärmtem Wasser aus dem Wasserspeicher 1 benutzt wird. Der Wassererhitzer 100 umfasst eine Heizquelle bzw. Heizeinrichtung (in den Zeichnungen nicht gezeigt), die zum Erwärmen des kalten Wassers benutzt wird und in verschiedenen Formen ausgeführt werden kann.

In einer Ausführungsform eines elektrischen Wassererhitzers ist ein Flansch an einem vertikalen Ende des Wasserspeichers 1 installiert, und ein elektrisches Heizrohr ist entlang des Flanschs installiert und erstreckt sich in das in dem Wasserspeicher 1 aufgenommene Wasser. Das Heizrohr kann einen Widerstandsdraht hoher Impedanz umfassen, und das positive und das negative Ende des Widerstandsdrahts sind an dem Flansch angeordnet und an eine Wechselstromquelle von 220 V oder 110 V angeschlossen.

Es können ebenfalls andere Formen von Heizquellen verwendet werden, wie etwa Gas-Wassererhitzer, die Wasser innerhalb des Wasserspeichers über eine außerhalb des Wasserspeichers angeordnete Gasbrennkammer erwärmen.

In der Ausführungsform ist ein Schalsendeempfänger bzw. Schallsensor 4 an der Außenwand eines Wasserspeichers 1 angeordnet oder an einer beliebigen Position zwischen dem Wasserspeicher 1 und dem Gehäuse 2 angeordnet. Der Schallsensor 4 umfasst ein piezoelektrisches Element 41, das zum Senden und Empfangen einer Schallwelle benutzt wird. Dem Fachmann ist bekannt, dass ein piezoelektrisches Element primär aus Keramik oder Kristalltransistoren bzw. kristalline Transistoren hergestellt ist, wobei eine Form- bzw. Strukturänderung auftritt, nachdem eine Beanspruchung an das piezoelektrische Element angelegt ist, und eine entsprechende elektromotorische Kraft erzeugt. Eine Wasser-Absperrvorrichtung ist an dem Einlassrohr 11 angeordnet. In der vorliegenden Ausführungsform ist die Wasser-Absperrvorrichtung ein elektromagnetisches Ventil 5.

Ein elektromagnetisches Ventil umfasst ein Ventilgehäuse, eine Spule um das Ventilgehäuse und einen Ventilkern, der linear innerhalb des Ventils beweglich ist. Ein Magnetfeld wird durch Einspeisen elektrischer Ströme in die Spule um das Ventilgehäuse des elektromagnetischen Ventils erzeugt; daher bewegt sich der Ventilkern linear.

In der vorliegenden Ausführungsform ist die Bewegungsrichtung des Ventilkerns senkrecht zu dem Einlassrohr 11. Der Wassererhitzer 100 ferner ein Steuersystem bzw. Controller 3, wobei das Steuersystem 3 eine Leiterplatte aufweist, die eine Vielzahl von elektronischen Steuerbauteilen aufweist, wobei der Schaltkreis am Flansch angeordnet ist.

Mit Bezugnahme auf Fig. 2 sind das Steuersystem 3, der Schallsensor 4 und das elektromagnetische Ventil 5 elektrisch miteinander verbunden. In der vorliegenden Ausführungsform umfasst das Steuersystem 3 elektronische Bauteile: einen Controller 31, der zum Steuern des Betriebs des elektromagnetischen Ventils 5 benutzt wird, einen Treiberstromkreis 32 zum Ansteuern des Schallsensors 4, Schallwellen zu erzeugen, einen Verstärker 33 und einen Komparator 34 usw.

Der Controller 31 ist ein Mikrocontroller, und der Mikrocontroller umfasst eine Zentraleinheit (CPU), einen Festwertspeicher (ROM), einen Arbeitsspeicher (RAM), ein Zeitgebermodul bzw. Taktgeber, einen A/D-Wandler und eine Vielzahl von Eingangs-/Ausgangsanschlüssen. Fraglos kann der Controller 31 andere Formen von integrierten Schaltungen benutzen, wie etwa eine anwendungsspezifische integrierte Schaltung (ASIC) oder eine im Feld programmierbare Anordnung von Logikgattern (FPGA) usw. Wenn es erforderlich ist, den Schallsensor 4 einzuschalten, gibt der Controller 31 ein Steuersignal an den Treiberstromkreis 32 über den Ausgangsanschluss aus. Der Treiberstromkreis 32 gibt dann ein Wechselspannungssignal an den Tonfrequenzsensor 4 aus. Das piezoelektrische Element 41 des Tonfrequenzsensors 4 schwingt entsprechend durch die angelegte Wechselbeanspruchung und gibt dadurch Schallwellen einer spezifischen Frequenz aus. Die Frequenz der Schallwelle steht in Beziehung zu der angelegten Spannung, die im Voraus festgelegt ist.

Die ausgesendete Schallwelle wird durch die Außenwand des Wasserspeichers 1 reflektiert und durch den Schallsensor 4 empfangen. Dadurch tritt eine Formänderung bzw. Strukturänderung des piezoelektrischen Elements 41 als Ergebnis des Drucks der Schallwellen auf; daher werden entsprechende Spannungssignale erzeugt. Die Spannungssignale werden durch den Verstärker 33 verstärkt, und nach dem Verstärken werden die Spannungssignale durch den Komparator 34 mit einem im Voraus bestimmten Schwellwert verglichen.

Der Schwellwert, der zum Darstellen eines Frequenz-Extremwerts, welcher durch das piezoelektrische Element empfangenen reflektierten Schallwelle benutzbar ist, wenn eine Wasserleckage am Wasserspeicher auftritt, ist eine Funktion der durch das piezoelektrische Element ausgesendeten Schallwellenfrequenz. Die Funktion kann empirisch ermittelt werden. Wenn die Außenfläche des Wasserspeichers intakt ist, ist das Spannungssignal, das die Frequenz der reflektierten Schallwelle darstellt, niedriger als der im Voraus bestimmte Schwellwert. Wenn es jedoch Risse oder defekte Poren an der Außenfläche des Wasserspeichers 1 gibt, was bedeutet, dass der Wasserspeicher korrodiert ist und eine Wasserleckage aufweist, ändert sich die Frequenz der reflektierten Schallwelle.

Diesmal ist das Spannungssignal, das die Frequenz der reflektierten Schallwelle darstellt, höher oder gleich dem im Voraus bestimmten Schwellwert. Als Ergebnis gibt der Komparator 34 ein Signal an den Controller 31 aus, wie etwa ein High-Signal, und der Controller 31 beaufschlagt dann die Spule des elektromagnetischen Ventils 5 mit elektrischen Strömen, um den Ventilkern anzusteuern, sich zu bewegen und das Wasser innerhalb des Einlassrohrs 11 am Fließen zu hindern bzw. abzudrehen.

Als eine optimierte Ausführungsform steuert der Controller 31 auch die Heizquelle 6. In einem Beispiel eines elektrischen Wassererhitzers ist der Controller 31 mit einem Temperatursensor (in den Schaltbildern nicht gezeigt) verbunden, der zum Erfassen der Wassertemperatur benutzt wird. Wenn erkannt wird, dass die Wassertemperatur bis zu einer im Voraus bestimmten Temperatur aufgeheizt ist, unterbricht der Controller 31 dem Heizrohr zugeführte elektrische Strom. Es ist anzumerken, dass die oben erwähnte Ausführungsform eine optimierte oder bevorzugte Ausführungsform der vorliegenden Erfindung ist. Mit anderen Worten, ein elektrischer Wassererhitzer gemäß der vorliegenden Erfindung ist nicht auf die oben erwähnte Ausführungsform beschränkt; einfache Abwandlungen und Ersetzungen werden als innerhalb des Schutzumfangs der Ansprüche der vorliegenden Erfindung betrachtet. Zum Beispiel ist in anderen Ausführungsformen ein piezoelektrisches Element nur ein Bauteil, das zum Aussenden einer Schallwelle benutzt wird, und ein Schallsensor kann auch ein Kondensatormikrofon zum Empfangen reflektierter Schallwellen und Erzeugen entsprechender elektrischer Signale umfassen.

Die vorliegende Erfindung ist dahingehend vorteilhaft, dass der Schallsensor bzw. Schalsendeempfänger verwendet wird, um eine Wasserleckage zu erfassen; eine entsprechende Veränderung der Tonfrequenz wird in Echtzeit erfasst, und entsprechende Maßnahmen werden ergriffen, um die durch die Wasserleckage verursachten Auswirkungen zu minimieren. Außerdem hat ein Schallsensor im Vergleich zu dem nach dem Stand der Technik benutzten Wassersammelbecken einen einfachen Aufbau und kompakte Maße, was bei der Konstruktion und Herstellung von Wassererhitzern leicht auszuführen ist.

## Patentansprüche

1. Warmwassergerät (100), umfassend:
- einen Wasserspeicher (1) zum Aufnehmen von zu erwärmenden Wasser;
- einen Wassereinlauf (11) zum Einspeisen des Wasserspeichers (1);
- einen Wasserablauf (12) zum Entnehmen von Warmwasser aus dem Wasserspeicher (1); und
- eine Heizeinrichtung (6) zum Erwärmen des Wassers im Wasserspeicher (1);
**gekennzeichnet durch**
- einen Schallsendeempfänger (4) zum Erfassen einer **durch** eine Wasserleckage des Wasserspeichers (1) hervorgerufenen Veränderung einer Tonfrequenz.

2. Warmwassergerät (100) nach Anspruch 1, **dadurch gekennzeichnet, dass** der Schallsendeempfänger (4) ein piezoelektrisches Element (41) zum Senden von Schalwellen mit einer bestimmten Tonfrequenz umfasst.

3. Warmwassergerät (100) nach Anspruch 2, **dadurch gekennzeichnet, dass** das piezoelektrische Element (41) weiter dergestalt ausgebildet ist, um Schallwellen zu empfangen, die von einer Außenwand des Wasserspeichers (1) reflektiert werden.

4. Warmwassergerät (100) nach einem der vorhergehenden Ansprüche, **dadurch gekennzeichnet, dass**, der Schalsendeempfänger (4) und/oder das piezoelektrische Element (41) dergestalt ausgebildet sind, um auf Basis eines vorherbestimmten Schwellwerts der Tonfrequenz eine durch eine Wasserleckage hervorgerufenen Veränderung der Tonfrequenz zu erfassen.

5. Warmwassergerät (100) nach einem der vorhergehenden Ansprüche, **dadurch gekennzeichnet, dass** das Warmwassergerät (100) weiter eine Wasserabsperrvorrichtung (5) und ein Steuersystem (31) umfasst, das die Wasserabsperrvorrichtung (5) und den Schalsendeempfänger (4) miteinander verknüpft, wobei das Steuersystem (31) dergestalt ausgebildet ist, um Signale zu empfangen, welche die Veränderung der Tonfrequenz darstellen, und um die Wasserabsperrvorrichtung (5) im Falle einer Veränderung der Tonfrequenz zu aktivieren.

6. Warmwassergerät (100) nach Anspruch 5, **dadurch gekennzeichnet, dass** die Wasserabsperrvorrichtung (5) ein elektromagnetisches Ventil (5) umfasst, das an dem Wassereinlauf (11) angeordnet ist, und dass das elektromagnetische Ventil (5) ansteuerbar ist, um den Wasserfluss durch den Wassereinlauf (11) zu sperren.

7. Warmwassergerät (100) nach Anspruch 5, **dadurch gekennzeichnet, dass** das Steuersystem (31) weiter zum Steuern der Heizeinrichtung (6) einsetzbar ist.
